**Europäisches Patentamt**

**European Patent Office**

**Office européen des brevets**

(19)

(11) Veröffentlichungsnummer : **0 331 926 B1**

(12)                    **EUROPÄISCHE PATENTSCHRIFT**

(45) Veröffentlichungstag der Patentschrift :
25.09.91 Patentblatt 91/39

(51) Int. Cl.⁵ : **B23D 77/02**

(21) Anmeldenummer : 89102299.8

(22) Anmeldetag : 10.02.89

(54) Einschneiden-Reibahle mit Spanleiteinrichtung.

(30) Priorität : 05.03.88 DE 3807224

(43) Veröffentlichungstag der Anmeldung :
13.09.89 Patentblatt 89/37

(45) Bekanntmachung des Hinweises auf die
Patenterteilung :
25.09.91 Patentblatt 91/39

(84) Benannte Vertragsstaaten :
AT BE CH DE ES FR GB IT LI NL SE

(56) Entgegenhaltungen :
CH-A- 645 051

(56) Entgegenhaltungen :
DE-B- 1 922 131
DE-C- 1 009 889
GB-A- 106 917
US-A- 2 882 765

(73) Patentinhaber : MAPAL Fabrik für
Präzisionswerkzeuge Dr. Kress KG
Obere Bahnstrasse 13 Postfach 1520
W-7080 Aalen (DE)

(72) Erfinder : Der Erfinder hat auf seine Nennung
verzichtet

(74) Vertreter : Gleiss, Alf-Olav, Dipl.-Ing.
Patentanwalt Silberburg Strasse 187
W-7000 Stuttgart 1 (DE)

**Beschreibung**

Die Erfindung betrifft eine Einschneiden-Reibahle mit einer in einem Grundkörper befestigten, mindestens eine Schneide aufweisenden Messerplatte und zwei am Umfang des Grundkörpers angeordneten Führungseinrichtungen, sowie mit einer zwischen der Schneide und der ersten, der Schneide in Drehrichtung in einem Abstand nachfolgenden Führungseinrichtung angeordneten Spanleiteinrichtung, die als in der Umfangsfläche des Grundkörpers eingebrachte Mulde ausgebildet ist.

Eine Einschneiden-Reibahle der eingangs genannten Art geht aus der GB-A-106917 hervor. Diese weist an ihrem Grundkörper eine mit Schneide versehene Messerplatte sowie zwei die Umfangsfläche des Grundkörpers überragende Rollen auf, die Führungseinrichtungen bilden. Ferner ist zwischen der Schneide der Messerplatte und der der Schneide nachgeordneten Führungseinrichtung eine Spanleiteinrichtung vorgesehen, die als in die Umfangsfläche des Grundkörpers eingebrachte Mulde ausgebildet ist. Diese Mulde weist -im Querschnitt gesehen- die Form eines Kreisabschnitts auf. Diese Formgebung der Spanleiteinrichtung führt zu keilförmig zulaufenden Räumen in den Seitenbereichen. Eindringende Späne können sich daher sehr leicht in diesen Keilräumen verklemmen, was zu Störungen und Maßungenauigkeiten sowie Oberflächenqualitätseinbußen führt.

Ferner ist eine Einschneiden-Reibahle aus der DE-AS 1922131 bekannt, die eine Messerplatte mit Schneide und zwei an der Umfangsfläche des Grundkörpers der Reibahle angeordnete Führungsleisten aufweist, wobei die erste Führungsleiste der Schneide um ca. 40 bis 45° -in Drehrichtung gesehen- nacheilt und die zweite Führungsleiste der Schneide gegenüberliegt. Eine derartige Reibahle stützt sich an der zu bearbeitenden Bohrung an der Schneide und an den beiden Führungsleisten ab. Dabei ergibt sich das Endmaß der bearbeiteten Bohrung durch den Abstand der Schneide zur zweiten Führungsleiste. Das Bohrungsmaß ist nur korrekt, wenn die der Messerplatte gegenüberliegende zweite Führungsleiste an der Bohrungswand anliegt.

Da Einschneiden-Reibahlen der Feinbearbeitung von Bohrungen dienen, ist es in den meisten Fällen notwendig, die Bohrungen zum Beispiel durch Senken für die Feinbearbeitung vorzubereiten. Das Spanvolumen bei dieser Vorbearbeitung ist meist relativ groß, wobei die erzeugten Späne dick und insbesondere bei der Bearbeitung von Stahl lang sind. Es ist notwendig, vor der Feinbearbeitung von Bohrungen, die bei der Vorbearbeitung auftretenden Späne sorgfältig zu entfernen. Dies gelingt insbesondere bei der vollautomatischen Bearbeitung zum Teil nicht immer. Verbleiben bei der Vorbearbeitung entstandene Späne in der Bohrung, so können diese in den zwischen der Bohrungswandung und der Umfangsfläche des Grundkörpers bei der Reibahle bestehenden Zwischenraum, der von der Messerplatte und der in einem Abstand nachfolgend ersten Führungsleiste beziehungsweise von der ersten und der zweiten Führungsleiste begrenzt wird, gelangen und sich dort verklemmen. Bei entsprechender Dicke und Form der Späne ändert sich dadurch das Bohrungsmaß. Überdies kann durch solche eingeschlossenen Späne -wie bereits erwähnt- die Oberflächenqualität der Bohrungswand stark beeinträchtigt werden. Versuche, die Späne durch verstärkten Kühlmitteldruck zu entfernen, schlugen fehl, da die bei der Vorbearbeitung entstehende Form der Späne unbeeinflußt bleibt und erfahrungsgemäß insbesondere beim Senken relativ lange, gewundene Späne mit großer Dicke entstehen, die zum Teil in der Bohrung stecken und teilweise über den Rand herausragen.

Aufgabe der Erfindung ist es daher, eine Einschneiden-Reibahle zu schaffen, bei der in der zu bearbeitenden Bohrung vorhandene Späne sicher abgeführt werden, so daß eine Beeinflussung des Endmaßes der Bohrung sowie eine Beeinträchtigung der Oberflächenqualität der Bohrungswand durch Späne praktisch ausgeschlossen ist.

Diese Aufgabe wird bei einer Einschneiden-Reibahle der eingangs genannten Art mit Hilfe der im Hauptanspruch angeführten Merkmale gelöst. Vorteil dieser Einschneiden-Reibahle ist es, daß zwischen Messerplatte und nachfolgende erste Führungsleiste beziehungsweise zwischen erste und zweite Führungsleiste geratene Späne durch die besondere Formgebung der die Spanleiteinrichtung bildenden Mulde so geführt werden, daß sie nicht zwischen die Bohrungswand und die zweite Führungsleiste gelangen können ; auch ist durch die Formgebung der Spanleiteinrichtung ein Verklemmen innerhalb der Mulde beziehungsweise in deren Zwickelbereichen nicht gegeben. Auf diese Weise ist somit sichergestellt, daß eine optimale Bohrungsoberfläche bei exaktem Bearbeitungsmaß erreicht wird, auch wenn sich noch Späne von der Vorbearbeitung in der Bohrung befinden, wenn die Feinbearbeitung eingeleitet wird. Besonders bevorzugt ist ein Ausführungsbeispiel, bei dem die Spanleiteinrichtung zwischen der ersten Führungsleiste und der der Schneide gegenüberliegenden zweiten Führungsleiste angeordnet ist. Ferner kann bevorzugt vorgesehen sein, daß die zwischen den beiden Führungsleisten angeordnete Mulde mehrere Zonen beziehungsweise Bereiche verschiedener Tiefe aufweist. Zwischen Bohrungswand und Grundkörper der Reibahle eingeschlossene Späne werden von der Mulde aufgenommen und können daher die Reibahle nicht aus ihrer Position abdrängen. Die von der Bohrungswand während der Rotation der Reibahle auf eingeschlossene Späne ausgeübte Reibung wird überdies durch die besondere Formgebung der Spanleiteinrichtung derart herabgesetzt, daß Späne auch nicht zwischen die zweite Führungsleiste und Bohrungswand gelangen können.

Bei einem weiteren bevorzugten Ausführungsbeispiel der Erfindung schließt sich an die Mulde ein als Sicherheitszone dienender Bereich ein, durch den zusätzlich verhindert wird, daß Späne, die aus der Mulde herausragen, zwischen Führungsleiste und Bohrungswand gelangen.

Bevorzugt wird weiterhin ein Ausführungsbeispiel, das durch eine in der Sicherheitszone angeordnete, mit einem Kühlmittelzufuhrkanal in Verbindung stehende Rinne gekennzeichnet ist. Durch das in dieser Zone zugeführte Kühlmittel entsteht eine Strömung, die Späne von der unmittelbar an diese Zone angrenzenden Führungsleiste abhält.

Weitere Ausgestaltungen ergeben sich aus den übrigen Unteransprüchen.

Die Erfindung wird im folgenden anhand der Figuren näher erläutert. Es zeigen :

Figur 1 eine Vorderansicht einer bekannten Einschneiden-Reibahle in einer Bohrung ;

Figur 2 eine Vorderansicht einer in einer Bohrung angeordneten Einschneiden-Reibahle mit einer zwischen den Führungsleisten angeordneten Spanleiteinrichtung ;

Figur 3 eine Einschneiden-Reibahle gemäß Figur 2 zum Teil im Schnitt, wobei eine Kühlmittelzufuhrrinne erkennbar ist ; und

Figur 4 eine perspektivische Ansicht der in den Figuren 2 und 3 dargestellten Einschneiden-Reibahle.

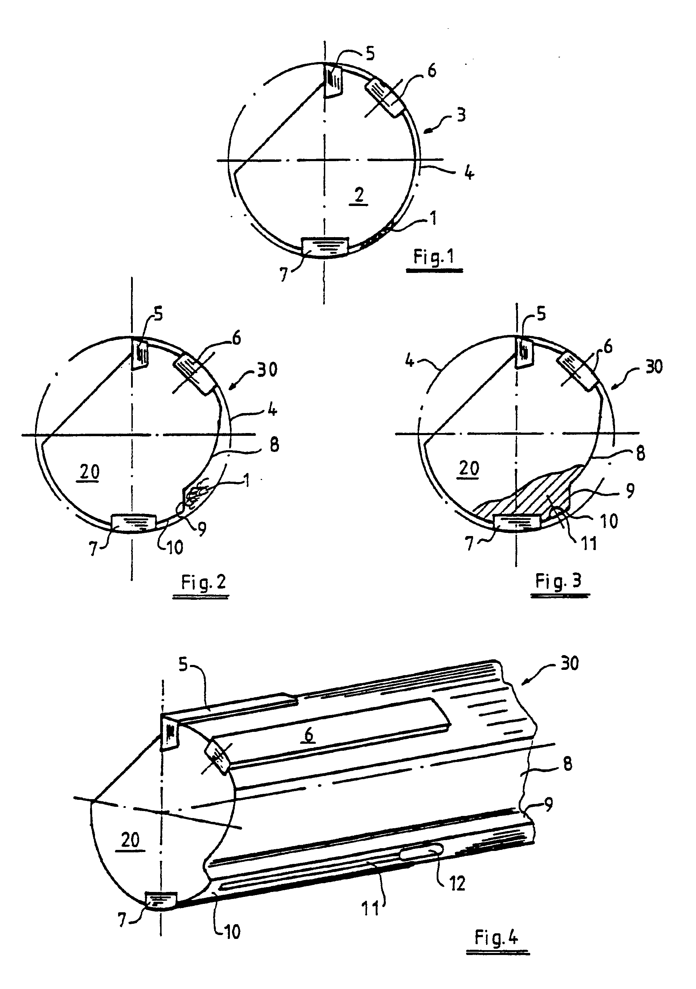

Aus der in Figur 1 wiedergegebenen Skizze ist erkennbar, daß bei der Feinbearbeitung von Bohrungen Späne 1, die von vorhergehenden Arbeitsschritten stammen, zwischen den Grundkörper 2 der Reibahle 3 und die Bohrungswand 4 gelangen können und zwar in den von der Messerplatte bzw. der Schneide 5 und der nachfolgenden ersten Führungsleiste 6 und/oder in den von der ersten und zweiten Führungsleiste 7 begrenzten Raum. Die Späne können so zwischen Grundkörper und der Bohrungswand 4 eingeklemmt werden, daß das Endmaß der Bohrung vom vorgegebenen Wert abweicht. Überdies kann die Oberfläche der bearbeiteten Bohrung beeinträchtigt werden.

Figur 2 zeigt eine Vorderansicht einer erfindungsgemäßen Reibahle 30 mit einer Spanleiteinrichtung, die als zwischen den Führungsleisten liegende Mulde 8 ausgebildet ist. Gleiche Teile sind mit gleichen Bezugszeichen versehen. Auf ihre Beschreibung wird hier verzichtet. Aus der Vorderansicht ist ersichtlich, daß sich die Mulde in einer ersten Zone 8 allmählich in Richtung auf die Drehachse der Reibahle 30 senkt und schließlich in einer zweiten Zone 9 in einer steilen Schulter endet. In der ersten Zone 8 der Mulde verbreitet sich also der Raum zwischen Bohrungswand und Grundkörper 20 der Reibahle allmählich. Zwischen Reibahle und Bohrungswand 4 gelangte Späne 1 werden durch die Mulde von der rotierenden Reibahle 30 aufgenommen und mitgeführt. An die langsam abfallende erste Zone 8 schließt sich als zweite Zone 9 die steil ansteigende Schulter an. Diese verhindert, daß Späne, die sich in der ersten Zone 8 gesammelt haben, in Richtung auf die gegenüber der Schneide 5 liegende, zweite Führungsleiste 7 weiterwandern.

Aus Figur 2 ist erkennbar, daß die zweite Zone in eine weitere Zone, eine Sicherheitszone 10 übergeht, die verhindert, daß über die Schulter 9 hinweg Späne sich an die zweite Führungsleiste 7 anlegen und diese beschädigen.

In Figur 3, in der wiederum gleiche Teile mit gleichen Bezugszeichen versehen sind, ist eine in der Sicherheitszone angeordnete Rinne 11 einer Spanabführungseinrichtung dargestellt, die mit einem Kühlmittelzufuhrkanal 12 (s. Figur 4) in Verbindung steht. Durch diese Rinne 11 kann bei innerer, direkter Kühlmittelzuführung ein Kühlmittel unter Druck herangeführt werden, wodurch eine von der zweiten Führungsleiste 7 zur Schulter 9 gerichtete Strömung entsteht, die zusätzlich verhindert, daß Späne an die zweite Führungsleiste 7 gelangen.

Die perspektivische Darstellung der Einschneiden-Reibahle in Figur 4 zeigt den Übergang der Rinne 11 in einen Kühlmittelzufuhrkanal 12. Die Ausbildung der Spanleiteinrichtung wird hier noch einmal besonders deutlich. Bei dem in Figur 4 dargestellten Ausführungsbeispiel erstreckt sich die Mulde der Spanleiteinrichtung über einen Bereich, der länger als die Führungsleisten 6, 7 ist.

Aus dem oben Gesagten ist ohne weiteres ersichtlich, daß eine derartige Spanleiteinrichtung mit verminderten Dimensionen auch zwischen der Schneide 5 und der ersten Führungsleiste 6 untergebracht werden kann. Es ist auch möglich, sowohl zwischen Schneide 5 und erster Führungsleiste 6 als auch zwischen den beiden Führungsleisten 6 und 7 eine Spanleiteinrichtung anzuordnen.

Nach allem wird deutlich, daß durch die Spanleiteinrichtung bei Vorbearbeitungsschritten entstande Späne, die in der Bohrung verblieben und in den Zwischenraum zwischen dem Grundkörper der Reibahle und die Bohrungswand geraten sind, sicher so geführt werden, daß sie keinen negativen Einfluß auf den Enddurchmesser der Bohrung und auf die Feinbearbeitungsqualität der Bohrungswand haben. Es hat sich gezeigt, daß auch bei Umdrehungsgeschwindigkeiten von 3000 U/min zwischen Reibahle und Bohrungswand eingedrungene Späne sicher geführt werden.

## Patentansprüche

1. Einschneiden-Reibahle (30) mit einer in einem Grundkörper (20) befestigten, mindestens eine Schneide (5) aufweisenden Messerplatte und zwei am Umfang des Grundkörpers (20) angeordneten Führungseinrichtungen, sowie mit einer zwischen der Schneide (5) und der ersten, der Schneide (5) in Drehrichtung in einem Abstand nachfolgenden Führungseinrichtung angeordneten Spanleiteinrichtung, die als in der Umfangsfläche des Grundkörpers (20) eingebrachte Mulde ausgebildet ist, **dadurch gekennzeichnet,** daß die Führungseinrichtungen als Führungsleisten (6, 7) ausgebildet sind und daß sich die Mulde in Gegendrehrichtung zum Drehsinn der Reibahle (30) in einer ersten Zone (8) allmählich in Richtung auf die Drehachse der Reibahle (30) senkt und schließlich in einer zweiten Zone (9) wieder steil ansteigt.

2. Einschneiden-Reibahle nach Anspruch 1, **dadurch gekennzeichnet,** daß die Spanleiteinrichtung zwischen der ersten Führungsleiste (6) und der der Schneide (5) gegenüberliegenden zweiten Führungsleiste (7) angeordnet ist.

3. Einschneiden-Reibahle nach einem der vorhergehenden Ansprüche, **dadurch gekennzeichnet,** daß die Mulde mehrere Zonen verschiedener Tiefe aufweist.

4. Einschneiden-Reibahle nach einem der vorhergehenden Ansprüche, **dadurch gekennzeichnet,** daß im Anschluß an die Mulde eine als Sicherheitszone dienende Zone (10) vorgesehen ist, die mit der Umfangsfläche des Grundkörpers (20) übereinstimmt.

5. Einschneiden-Reibahle nach Anspruch 4, **gekennzeichnet durch** eine in der Zone (10) angeordnete, mit einem Kühlmittelzuführkanal (12) in Verbindung stehende Rinne (11).

6. Einschneiden-Reibahle nach einem der vorhergehenden Ansprüche, **dadurch gekennzeichnet,** daß sich die Spanleiteinrichtung mindestens über die Länge der Führungsleisten (6, 7) erstreckt.

**Revendications**

1. Alésoir monolame (30) avec un bloc d'appui fixé à un corps de base (20), présentant au moins une lame (5) et avec deux barres de guidage disposées sur le pourtour du corps de base (20), ainsi qu'avec un dispositif de guidage de copeaux disposé entre la lame (5) et la première barre de guidage qui suit à une certaine distance la lame (5) dans le sens de rotation, dispositif qui est formé comme une cavité pratiquée dans la périphérie du corps de base (20), alésoir caractérisé en ce que les dispositifs de guidage sont constituées sous la forme de barres de guidage (6, 7) et que la cavité en sens inverse du sens de rotation de l'alésoir (30) s'agrandit dans une première zone (8) peu à peu dans le sens de l'axe de rotation de l'alésoir (30) et finalement se rétrécit brusquement dans une deuxième zone (9).

2. Alésoir monolame selon la revendication 1, caractérisé en ce que le dispositif de guidage de copeaux est placé entre la première barre de guidage (6) et la deuxième barre de guidage (7) située à l'opposé de la lame (5).

3. Alésoir monolame selon l'une des revendications précédentes, caractérisé en ce que la cavité présente plusieurs zones de profondeurs différentes.

4. Alésoir monolame selon l'une des revendications précédentes, caractérisé en ce qu'il est prévu, adjacent à la cavité, une zone (10) servant de zone de sécurité, qui coïncide avec la périphérie du corps de base (20).

5. Alésoir monolame selon la revendication 4, caractérisé par une rainure (11) disposée dans la zone (10), en liaison avec un canal (12) d'admission d'un agent de refroidissement.

6. Alésoir monolame selon l'une des revendications précédentes, caractérisé en ce que le dispositif de guidage de copeaux s'étend au moins sur toute la longueur des barres de guidage (6, 7).

**Claims**

1. A single-blade reamer (30) with a cutter plate having at least one cutting edge (5) and secured in a main body (20), and two guide devices arranged on the circumference of the main body (20), and with a chip-conveying device arranged between the cutting edge (5) and the first guide device following the cutting edge (5) at a distance in the direction of rotation, which chip-conveying device is designed as a trough accommodated in the circumferential surface of the main body (20), characterised in that the guide devices are designed as guide strips (6, 7) and in that the trough, in a direction of rotation counter to the direction of rotation of the reamer (30), gradually sinks in a first zone (8) towards the rotation axis of the reamer (30) and finally rises again steeply in a second zone (9).

2. A single-blade reamer according to claim 1, characterised in that the chip-conveying device is arranged between the first guide strip (6) and the second guide strip (7) lying opposite the cutting edge (5).

3. A single-blade reamer according to any one of the preceding claims, characterised in that the trough has several zones of differing depth.

4. A single-blade reamer according to any one of the preceding claims, characterised in that a zone (10) serving as a safety zone is provided so as to adjoin the trough, which zone corresponds to the circumferential surface of the main body (20).

5. A single-blade reamer according to claim 4, characterised by a channel (11) arranged in the zone (10) and connected to a coolant feed conduit (12).

6. A single-blade reamer according to any one of the preceding claims, characterised in that the chip-conveying device extends at least over the length of the guide strips (6, 7).

Fig.1

Fig. 2

Fig. 3

Fig.4